# FASCICULE DE BREVET EUROPEEN

(11) **EP 1 868 955 B1**
(45) Date de publication et mention de la délivrance du brevet: **23.07.2008**
(21) Numéro de dépôt: 06726192.5
(22) Date de dépôt: 21.02.2006
(51) Int. Cl.: C04B 18/22, C04B 20/12

(54) **PROCEDE DE TRAITEMENT DE SURFACE DE GRANULATS A BASE D'ELASTOMERE**
VERFAHREN ZUR BEHANDLUNG DER OBERFLÄCHEN VON KÖRNIGEN MATERIALIEN AUF ELASTOMERBASIS
METHOD FOR TREATING SURFACES OF ELASTOMER-BASED GRANULAR MATERIALS

(30) Priorité: 22.02.2005 FR 0501767
(43) Date de publication de la demande: 26.12.2007
(73) Titulaire: Rincent BTP Services Matériaux, 76100 Rouen (FR)
(72) Inventeur: OGER, Pascal, F-94260 Fresnes (FR)
(74) Mandataire: Intes, Didier Gérard André
(86) Numéro de dépôt international: PCT/FR2006/050154
(87) Numéro de publication internationale: WO 2006/090084

(56) Documents cités:
- EP-A- 1 130 001
- WO-A-20/04024793
- FR-A- 2 098 704
- US-A- 4 035 192
- PATENT ABSTRACTS OF JAPAN vol. 2003, no. 10, 8 octobre 2003 (2003-10-08) & JP 2003 160327 A (DEGUSSA AG), 3 juin 2003 (2003-06-03)

## Description

L'invention concerne un procédé de traitement de surface de granulats à base d'élastomère, en particulier pour améliorer les conditions d'interface entre ces derniers et un liant du type hydraulique, hydrocarboné ou une résine de synthèse.

Le document EP-A-1 130 001 expose un tel procédé.

L'utilisation de granulats à base d'élastomère dans les mélanges granulaires reste un des débouchés les plus prometteurs pour la valorisation des déchets à base de plastique, caoutchouc (pneumatiques, bandes de caoutchouc, etc.).

Cependant, l'emploi de ces matériaux sous forme brute, c'est-à-dire sans traitement préalable, avec des liants aqueux ou anhydres, se heurte souvent à des problèmes d'adhérence entre le liant et la surface de granulats à base d'élastomère.

Cela conduit soit à des propriétés mécaniques réduites, notamment en fatigue, soit à des processus de fabrication complète, long et onéreux.

De manière connue, il a été proposé de réduire la taille des particules à base d'élastomère, afin de réduire les sollicitations aux interfaces.

Cependant, cette réduction de taille est souvent difficile et onéreuse.

On connaît des procédés de minéralisation de surface de matériaux, à l'aide de fibres végétales, comme par exemple des particules de bois, qui permettent d'améliorer les conditions d'interface entre les granulats et un liant.

Cependant dans ces procédés connus, l'utilisation finale de ces matériaux est orientée vers les bétons hydrauliques, à cause de la rigidité acquise lors du processus de minéralisation. -

Le problème que vise à résoudre l'invention est de transformer la surface des granulats à base d'élastomère, de manière à faciliter leur utilisation dans des mélanges aqueux ou anhydres et d'améliorer les performances mécaniques des produits ainsi fabriqués.

Le problème est résolu par le fait que selon le procédé :
- on fournit une pluralité de granulats à base d'élastomère,
- on applique un tensioactif à la surface des granulats,
- on applique une résine polymérique à la surface des granulats, puis
- on applique un liant du type hydraulique à la surface des granulats.

Les granulats sont à base de plastomère, d'élastomère, et peuvent par exemple contenir du caoutchouc naturel et/ou synthétique ; dans ce cas, ils peuvent provenir entre autres de pneumatiques usagés.

Les conditions d'interface entre les granulats et un liant du type hydraulique, hydrocarboné ou de manière générale une résine de synthèse se trouvent améliorées, lorsque les granulats sont minéralisés.

On comprend que le liant hydraulique a pour rôle de minéraliser la surface des granulats et que le tensioactif et la résine polymérique forment un film qui a, entre autres, pour rôle de fixer le liant hydraulique sur les granulats à base d'élastomère.

De préférence, la résine polymérique est une résine de polymères synthétiques.

Afin d'optimiser le procédé, on applique de préférence simultanément le tensioactif et la résine polymérique.

Pour ce faire, il est préférable d'appliquer une solution aqueuse comprenant le tensioactif et la résine polymérique.

Pour assurer une bonne application de la résine sur les granulats, la résine polymérique est de préférence miscible à l'eau.

L'utilisation de résine polymérique sert à donner la souplesse au film qui entoure le granulat, lorsque le liant hydraulique va venir se fixer sur le film.

Le tensioactif permet un filmage par l'eau, du granulat, afin que l'eau épouse au plus près la forme extérieure des granulats. Par ailleurs, le tensioactif permet de réduire la quantité d'eau utilisée, ce qui permet d'obtenir des granulats minéralisés secs ou sensiblement secs au toucher.

En effet, les proportions sont de préférence choisies pour que toute l'eau soit absorbée par l'hydratation du liant hydraulique et qu'au final, il ne reste qu'un film de résine mélangé avec des cristaux minéraux issus de l'hydratation - recristallisation du liant hydraulique qui entoure le granulat en suivant toutes ces aspérités.

Ainsi, l'eau n'est qu'un vecteur pour fixer la résine et les grains de liant hydraulique, en permettant d'hydrater le liant hydraulique. En terme de produit fini, les granulats traités sont secs.

Les granulats ainsi traités présentent une surface extérieure polaire par sa minéralité, qui est en même temps, insensible à l'eau.

Selon l'utilisation finale des granulats, on choisira de préférence un liant hydraulique qui comporte un ciment (correspondant de préférence aux normes NF EN 197-1 ou NF P 15-108, du type CEM1 52-5R, par exemple), un liant hydraulique routier spécial de type connu, correspondant par exemple à la norme NF P 15-108, ou un produit à hydraulicité latente.

L'utilisation d'un produit à hydraulicité latente permet de retarder la prise du liant. Dans ce dernier cas, on choisira de préférence un laitier, des cendres volantes, de la chaux (correspondant par exemple à la norme NF EN 459-1 ou NF P 98-101), etc.... A l'inverse, afin d'accélérer la prise, le liant hydraulique peut comporter un accélérateur de prise.

L'invention concerne aussi un procédé de conditionnement de granulats obtenus par le procédé précité.

Grâce à l'utilisation d'une résine polymérique et au fait que les granulats minéralisés sont sensiblement secs au toucher, il est possible d'éviter le collage des granulats entre eux, ce qui permet dès la fin du traitement, de conditionner les granulats minéralisés obtenus par le procédé selon l'invention, sans risque de collage.

L'invention sera bien comprise et ses avantages apparaîtront mieux à la lecture de la description détaillée qui suit, d'un mode de réalisation de l'invention représenté à titre d'exemple non limitatif.

La description se réfère aux dessins annexés sur lesquels :
- la figure 1A représente une vue schématique d'un granulat à base d'élastomère,
- la figure 1B représente une vue schématique en coupe d'un granulat à base d'élastomère obtenu par le procédé selon l'invention,
- la figure 2 représente une vue schématique de l'application de tensioactif et de résine, et
- la figure 3 représente une vue schématique de l'application de liant hydraulique.

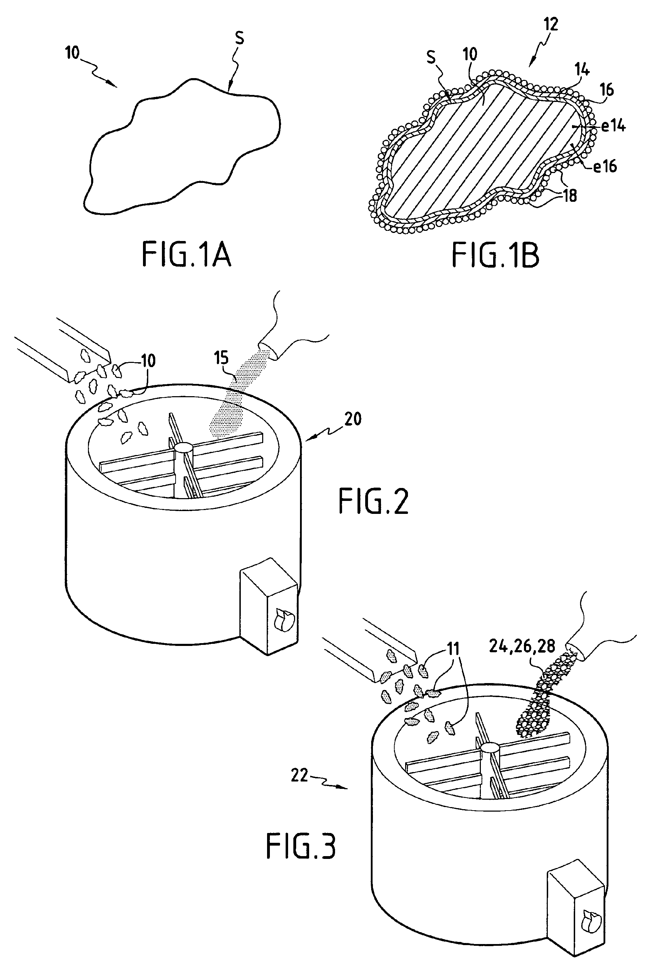

La figure 1A illustre un granulat à base d'élastomère 10 avant traitement et la figure 1B illustre un granulat à base d'élastomère 12 traité. Ce granulat à base d'élastomère 12 traité pour présenter une surface S minéralisée, provient du même granulat à base d'élastomère 10 sur lequel un tensioactif 14 a été appliqué pour recouvrir toute la surface S du granulat d'origine 10. On a ensuite appliqué une résine polymérique 16 sur la couche de tensioactif 14. Puis, un liant hydraulique 18 a été appliqué à la surface du granulat ainsi revêtu de tensioactif 14 et de résine polymérique 16.

Le tensioactif 14 permet de filmer le granulat à base d'élastomère 10 par l'eau qui épouse sensiblement la forme extérieure du granulat quelle que soit sa géométrie et quelles que soient les aspérités de sa surface S. Cette étape de mouillage constitue une préparation de la surface extérieure du granulat d'origine 10, qui améliore l'accrochage ultérieur de la résine et du liant. Lorsque la résine est appliquée, elle va elle aussi former un film autour de la surface du granulat préalablement filmé à l'aide du tensioactif.

Afin d'optimiser l'application du tensioactif et du liant hydraulique, il est préférable de mélanger la pluralité de granulats à base d'élastomère 10 dans une solution aqueuse 15 comprenant le tensioactif 14 et la résine polymérique 16, comme illustré sur la figure 2. Avant application du liant hydraulique, le granulat d'origine se trouve donc complètement enrobé par un film de tensioactif, d'eau et de résine.

Pour réaliser un bon mouillage de la surface des granulats à base d'élastomère 10, le rapport pondéral du tensioactif sur l'eau de la solution aqueuse 15 est compris entre 1 et 7 ‰, de préférence entre 2 et 5 ‰, tandis que le rapport pondéral de la résine polymérique sur l'eau est compris entre 1 et 10 %, de préférence entre 2 et 9 %.

En outre, il est préférable pour l'efficacité de mouillage, que le tensioactif soit miscible à l'eau ; en conséquence, on choisira de préférence, un tensioactif dont la valeur de la balance hydrophile lipophile adaptée à la nature hydrophobe de la surface des granulats, est comprise entre 0 et 15, de préférence entre 3 et 7.

On choisira de préférence le tensioactif parmi les alcools d'acide gras en chaîne linéaire ou en chaîne branchée, des éthoxylates de phénol linéaire, des éthoxylates d'amines gras, des esters de sorbitol, des polyéthylènes glycol et des esters de polyéthylènes glycol.

En outre, la résine polymérique doit, elle aussi, être miscible à l'eau, afin de se retrouver avec celle-ci autour du granulat et ainsi se combiner ultérieurement avec le liant hydraulique. Pour améliorer la miscibilité de la résine, on choisira de préférence une résine sous forme d'émulsion.

En fait, la résine polymérique utilisée est de préférence sous forme d'émulsion, de préférence anionique, de type élastomère, par exemple à base de latex naturel ou synthétique, de type SBR, SBS ou polyacrylate, ou de type plastomèrique, par exemple à base d'EVA (Ethylène Vinyle Acétate) ou d'EMA.

Un malaxeur 20 de type connu, par exemple du type malaxeur à béton, bétonnière ou malaxeur à axe horizontal, etc., peut être employé pour réaliser ce premier mélange destiné à revêtir les granulats à base d'élastomère 10 de tensioactif et de résine polymérique. De même, il est préférable de procéder par mélange, pour appliquer le liant du type hydraulique sur les granulats 11 ainsi revêtus de tensioactif et de résine polymérique, afin de recouvrir la surface des granulats 11.

Le tensioactif et la résine polymérique ayant un rôle de fixateur, on comprend que le liant hydraulique 18 est appliqué après que les granulats à base d'élastomère 10 soient revêtus par ledit tensioactif 14 et la résine polymérique 16.

En se référant à la figure 3, on voit qu'un malaxeur 22 de type connu peut à nouveau être employé pour réaliser un deuxième mélange permettant l'application du liant hydraulique. On disposera ainsi dans le malaxeur un mélange 24 comprenant de 7 à 15 % (en poids) de liant hydraulique, de préférence 8 à 12 %, et 4 à 12 % d'eau (en poids), de préférence 5 à 9 %, ainsi qu'un complément pondéral à 100 % de granulats 11 obtenus par le premier mélange, c'est-à-dire revêtus par le film de tensioactif et de résine polymérique.

Après avoir effectué ce deuxième mélange, les granulats 12 sont complètement traités et présentent ainsi une première couche comportant du tensioactif 14, une deuxième couche comportant de la résine polymérique 16 et une troisième couche sensiblement homogène de liant hydraulique 18. En fait, les deux premières couches forment chacune une pellicule, qui entoure toute la surface du granulat d'origine 10.

Le choix de la résine polymérique et la quantité appliquée permettent aux granulats ainsi traités, de conserver au moins en partie, la souplesse qu'ils avaient avant traitement et d'éviter le collage des granulats entre eux. En effet, le liant hydraulique qui les recouvre est sensiblement sec au toucher, de sorte que le revêtement d'un granulat n'adhère pas à celui des granulats voisins. Cependant, plus la couche de résine polymérique est fine, plus le granulat conservera son élasticité ; par contre, plus la couche de résine est épaisse, moins les granulats vont coller entre eux. Un compromis est donc à trouver. Le choix peut être effectué en fonction de la surface spécifique et du poids spécifique des granulats.

En outre, selon la nature de la résine appliquée, l'adhésion des grains de liant hydraulique peut dépendre de l'épaisseur de résine formant le film autour des granulats 11.

Ainsi traités, les granulats minéralisés conservent les éléments minéraux fixés à leur surface de manière pérenne dans le temps, même après manipulation ou mélange avec des matériaux et de l'eau, alors que l'emploi de filler calcaire ou siliceux entraîne la perte quasi totale des éléments minéraux.

Le procédé ainsi décrit est particulièrement adapté à des granulats qui présentent une granulométrie comprise entre 60 µm et 50 mm.

À titre d'exemples non limitatifs, on peut citer deux exemples :

### Exemple 1

Pour réaliser le procédé selon l'invention, on fournit :
- des granulats de granulométrie comprise entre 1 et 4 mm, de préférence entre 1 et 3 mm, dans une proportion comprise entre 75 et 95 %, de préférence entre 79 et 89 %,
- un tensioactif de type amine gras, dans un rapport pondéral avec l'eau compris entre 2 et 4 ‰, de préférence entre 1 et 5 ‰,
- une résine du type polyacrylate dans un rapport pondéral avec l'eau compris entre 2 et 10 %, préférentiellement entre 4 et 8 %,
- un liant hydraulique de type ciment CEM 1 de classe 32,5 à 52,5, de préférence 52,5 dans un rapport pondéral avec les granulats compris entre 12 et 18 %, de préférence entre 13 et 17 %,
- de l'eau dans un rapport pondéral avec le ciment compris entre 0,3 et 0,5, préférentiellement entre 0,31 et 0,4.

Dans ce cas, on obtient des granulats 12 présentant une couche de tensioactif d'épaisseur moyenne e14 et une couche de résine polymérique d'épaisseur moyenne e16 formant un film d'épaisseur correspondant sensiblement à e14+e16 qui est comprise entre 3 et 10 µm, et une couche de liant hydraulique dont les grains sont sensiblement régulièrement répartis à la surface du granulat.

Avec cet exemple, la densité des granulats traités 12 ne dépasse pas 115 % de la densité initiale et la masse volumique foisonnée ne dépasse pas 120 % de la masse volumique foisonnée initiale.

Les granulats 12 ainsi traités ont conservé sensiblement la même élasticité que les granulats d'origine 10 et peuvent en outre être conditionnés dès la fin du traitement sans pour autant coller entre eux.

Les granulats 12 ainsi obtenus par le procédé selon l'invention, peuvent être utilisés dès le séchage du liant hydraulique choisi, qui correspond au temps de réaction chimique permettant la création des liaisons hydrauliques, temps qui se situe généralement autour de quatre jours.

Les granulats 12 ainsi minéralisés peuvent être utilisés par exemple dans une formule de béton bitumineux, plus précisément du type Béton Bitumineux Semi Grenu (Norme NFP 98-130) par hauteur de 1 à 4 % en pondéral. Cette utilisation conduit, à module de richesse équivalent (caractérisant l'épaisseur de film sur les granulats d'origine), à ne pas perturber la tenue à l'eau du béton bitumineux ainsi obtenu, et, à quantité de bitume équivalente, à ce que le rapport air sur eau ne chute pas de plus de 10 %.

### Exemple 2

Pour réaliser le procédé selon l'invention, on fournit :
- des granulats de granulométrie comprise entre 4 et 8 mm, de préférence entre 4 et 7 mm, dans une proportion comprise entre 75 et 95 %, de préférence entre 81 et 92 %,
- un tensioactif de type amine gras, dans un rapport pondéral avec l'eau compris entre 1 et 5 %o, de préférence entre 2 et 4 ‰,
- une résine du type styrène acrylique dans un rapport pondéral avec l'eau compris entre 2 et 10 %, préférentiellement entre 4 et 8 %,
- un liant hydraulique de type ciment CEM 1 de classe 32,5 à 52,5, de préférence 52,5 dans un rapport pondéral avec les granulats compris entre 8 et 16 %, de préférence entre 9 et 14 %,
- de l'eau dans un rapport pondéral avec le ciment compris entre 0,25 et 0,45, préférentiellement entre 0,28 et 0,38.

L'utilisation des granulats ainsi obtenus par le procédé selon l'invention, en les mélangeant dans des liants hydrauliques, contribue à la réduction du retrait du produit final obtenu. Le retrait mesuré selon la norme NFP 15-433, avec des granulats non traités est de 1400 µm par mètre, tandis qu'il n'est plus que de 500 µm par mètre avec des granulats traités selon le procédé de l'invention.

En outre, l'utilisation de liant hydraulique conduit, sur les granulats minéralisés ainsi traités, à une perte massique inférieure à 10 % du poids du liant hydraulique utilisé, mesuré par un mode opératoire de malaxage à sec, à comparer à une perte de 80 % obtenue avec un matériau non hydraulique de type filler calcaire ou siliceux.

Un liant à hydraulicité latente peut être employé lorsque le temps disponible entre le conditionnement et l'utilisation finale est long (de l'ordre de 28 jours) ; a contrario, on ajoutera lors du deuxième mélange des accélérateurs de prise, lorsque le temps disponible entre le conditionnement et l'utilisation finale est court (inférieur à quatre jours).

Les épaisseurs des couches de tensioactif, de résine polymérique et de liant étant relativement faibles, la masse volumique des granulats varie peu au cours du procédé.

Le procédé selon l'invention permet d'améliorer l'interface avec le liant du type hydraulique, hydrocarboné ou toute résine de synthèse, de sorte qu'il permet soit d'améliorer leurs caractéristiques mécaniques à teneur d'ajout de liant équivalente (en particulier avec des liants hydrauliques), en particulier leur tenue en compression, soit d'obtenir des caractéristiques mécaniques équivalentes, mais pour un ajout moindre de liant.

Les granulats ainsi traités peuvent être utilisés dans les mélanges de bétons bitumineux, de graves ou sables traités aux liants hydrauliques, pour la fabrication des chaussées par exemple, ou dans des mélanges avec un liant de type hydraulique, hydrocarboné ou toute résine de synthèse, pour la fabrication de terrains sportifs (piste d'athlétisme, etc....), d'écran acoustique, de dalle amortissante, etc. Ils peuvent aussi être destinés à une utilisation par des particuliers.

Dans tous les cas, l'un des produits appliqués aux granulats, parmi le tensioactif, la résine ou le liant hydraulique comporte de préférence un colorant 26 permettant de teinter les granulats en leur donnant ainsi, un caractère plus esthétique que celui obtenu naturellement. En effet, la couleur naturelle obtenue après traitement est grise ou noire.

En outre, il peut être prévu que l'un au moins des produits appliqués aux granulats comporte en outre un produit ignifuge 28, afin d'obtenir des granulats ignifugés.

## Revendications

1. Procédé de traitement de surface de granulats à base d'élastomère, en particulier pour améliorer les conditions d'interface entre ces derniers et un liant du type hydraulique, hydrocarboné ou une résine de synthèse, **caractérisé en ce qu'** :
- on fournit une pluralité de granulats à base d'élastomère (10),
- on applique un tensioactif (14) à la surface (S) des granulats à base d'élastomère (10),
- on applique une résine polymérique (16) à la surface des granulats, puis
- on applique un liant du type hydraulique (18) à la surface des granulats.

2. Procédé selon la revendication précédente, **caractérisé en ce qu'**on applique simultanément le tensioactif (14) et la résine polymérique (16).

3. Procédé selon la revendication précédente, **caractérisé en ce qu'**on applique une solution aqueuse (15) comprenant le tensioactif (14) et la résine polymérique (16).

4. Procédé selon la revendication précédente, **caractérisé en ce qu'**on mélange les granulats (10) avec la solution aqueuse (15) de manière à recouvrir la surface (S) des granulats avec cette dernière (15).

5. Procédé selon l'une quelconque des revendications précédentes, **caractérisé en ce qu'**on mélange les granulats avec ledit liant du type hydraulique (18) de manière à recouvrir la surface des granulats avec ce dernier (18).

6. Procédé selon l'une quelconque des revendications précédentes, **caractérisé en ce que** les granulats à base d'élastomère (10) présentent une granulométrie comprise entre 60 µm et 50 mm.

7. Procédé selon l'une quelconque des revendications précédentes, **caractérisé en ce que** la résine polymérique (16) est une résine de polymères synthétiques.

8. Procédé selon l'une quelconque des revendications précédentes, **caractérisé en ce que** la résine polymérique à base d'élastomère (10) est miscible à l'eau.

9. Procédé selon l'une quelconque des revendications précédentes, **caractérisé en ce que** le tensioactif (14) présente une valeur de la balance hydrophile lipophile HLB adaptée à la nature hydrophobe de la surface des granulats à base d'élastomère (10), en étant comprise entre 3 et 7.

10. Procédé selon la revendication 3 et l'une quelconque des revendications précédentes, **caractérisé en ce que** le rapport pondéral du tensioactif (14) sur l'eau de la solution aqueuse (15) est compris entre 1 et 7 ‰.

11. Procédé selon l'une quelconque des revendications précédentes, **caractérisé en ce que** le liant hydraulique (18) comporte un ciment.

12. Procédé selon l'une quelconque des revendications précédentes, **caractérisé en ce que** le liant hydraulique (18) comporte un liant hydraulique routier spécial.

13. Procédé selon l'une quelconque des revendications précédentes, **caractérisé en ce que** le liant hydraulique (18) comporte un produit à hydraulicité latente.

14. Procédé selon l'une quelconque des revendications précédentes, **caractérisé en ce qu'**au moins l'un des produits appliqués aux granulats comporte un colorant (26).

15. Procédé selon l'une quelconque des revendications précédentes, **caractérisé en ce qu'**au moins l'un des produits appliqués aux granulats comporte en outre un produit ignifuge (28).

## Claims

1. Method for surface treatment of elastomer-based aggregates, in particular to improve interface conditions between the latter and a binder of hydraulic or hydrocarbon type or a synthetic resin, **characterised in that:**
- a plurality of elastomer-based aggregates (10) is provided,
- a surface-active agent (14) is applied to the surface (S) of the elastomer-based aggregates (10),
- a polymeric resin (16) is applied to the surface of the aggregates, then
- a hydraulic-type binder (18) is applied to the surface of the aggregates.

2. Method according to the preceding claim, **characterised in that** the surface-active agent (14) and the polymeric resin (16) are applied simultaneously.

3. Method according to the preceding claim, **characterised in that** an aqueous solution (15) comprising the surface-active agent (14) and the polymeric resin (16) is applied.

4. Method according to the preceding claim, **characterised in that** the aggregates (10) are mixed with the aqueous solution (15) so as to cover the surface (S) of the aggregates with the latter (15).

5. Method according to any one of the preceding claims, **characterised in that** the aggregates are mixed with said hydraulic-type binder (18) so as to cover the surface of the aggregates with the latter (18).

6. Method according to any one of the preceding claims, **characterised in that** the elastomer-based aggregates (10) have a grading comprised between 60 µm and 50 mm.

7. Method according to any one of the preceding claims, **characterised in that** the polymeric resin (16) is a synthetic polymer resin.

8. Method according to any one of the preceding claims, **characterised in that** the polymeric elastomer-based resin (10) is miscible with water.

9. Method according to any one of the preceding claims, **characterised in that** the surface-active agent (14) has a hydrophilic-lipophilic balance value HLB suited to the hydrophobic nature of the surface of the elastomer-based aggregates (10), being comprised between 3 and 7.

10. Method according to Claim 3 and any one of the preceding claims, **characterised in that** the weight ratio of the surface-active agent (14) to the water of the aqueous solution (15) lies between 1 and 7‰.

11. Method according to any one of the preceding claims, **characterised in that** the hydraulic binder (18) includes a cement.

12. Method according to any one of the preceding claims, **characterised in that** the hydraulic binder (18) includes a special hydraulic road binder.

13. Method according to any one of the preceding claims, **characterised in that** the hydraulic binder (18) includes a product with latent hydraulicity.

14. Method according to any one of the preceding claims, **characterised in that** at least one of the products applied to the aggregates includes a dye (26).

15. Method according to any one of the preceding claims, **characterised in that** at least one of the products applied to the aggregates further includes a fire retardant (28).

## Patentansprüche

1. Verfahren zur Oberflächenbehandlung von Granulaten auf Elastomerbasis, insbesondere, um die Grenzflächenbedingungen zwischen diesen letzteren und einem Bindemittel vom hydraulischen Typ, Kohlenwasserstofftyp oder einem Syntheseharz zu verbessern, **dadurch gekennzeichnet, daß**:
- man eine Mehrzahl von Granulaten auf Elastomerbasis (19) bereitstellt,
- man ein Tensid (14) auf die Oberfläche (S) der Granulate auf Elastomerbasis (10) aufbringt,
- man ein Polymerharz (16) auf die Oberfläche der Granulate aufbringt, und
- man dann ein Bindemittel vom hydraulischen Typ (18) auf die Oberfläche der Granulate aufbringt.

2. Verfahren nach dem vorhergehenden Anspruch, **dadurch gekennzeichnet, daß** man gleichzeitig das Tensid (14) und das Polymerharz (16) aufbringt.

3. Verfahren nach dem vorhergehenden Anspruch, **dadurch gekennzeichnet, daß** man eine wäßrige Lösung (15) aufbringt, die das Tensid (14) und das Polymerharz (17) umfaßt.

4. Verfahren nach dem vorhergehenden Anspruch, **dadurch gekennzeichnet, daß** die Granulate (10) mit der wäßrigen Lösung (15) derart gemischt werden, daß die Oberfläche (S) der Granulate mit der Lösung (15) bedeckt wird.

5. Verfahren nach einem der vorhergehenden Ansprüche, **dadurch gekennzeichnet, daß** die Granulate mit dem Bindemittel vom hydraulischen Typ (18) derart gemischt werden, daß die Oberfläche der Granulate mit diesem Bindemittel (18) bedeckt wird.

6. Verfahren nach einem der vorhergehenden Ansprüche, **dadurch gekennzeichnet, daß** die Granulate auf Elastomerbasis (10) eine Granulometrie zwischen 60 µm und 50 mm aufweisen.

7. Verfahren nach einem der vorhergehenden Ansprüche, **dadurch gekennzeichnet, daß** das Polymerharz (16) ein Harz aus synthetischen Polymeren ist.

8. Verfahren nach einem der vorhergehenden Ansprüche, **dadurch gekennzeichnet, daß** das Polymerharz auf Elastomerbasis (10) mit Wasser mischbar ist.

9. Verfahren nach einem der vorhergehenden Ansprüche, **dadurch gekennzeichnet, daß** das Tensid (14) einen Hydrophil-Lipophil-Balance-Wert HLB aufweist, der der hydrophoben Natur der Oberfläche der Granulate auf Elastomerbasis (10) angepaßt ist, indem er zwischen 3 und 7 liegt.

10. Verfahren nach Anspruch 3 und einem der vorhergehenden Ansprüche, **dadurch gekennzeichnet, daß** das Gewichtsverhältnis des Tensids (14) zum Wasser der wäßrigen Lösung (15) zwischen 1 und 7 ‰ liegt.

11. Verfahren nach einem der vorhergehenden Ansprüche, **dadurch gekennzeichnet, daß** das hydraulische Bindemittel (18) einen Zement umfaßt.

12. Verfahren nach einem der vorhergehenden Ansprüche, **dadurch gekennzeichnet, daß** das hydraulische Bindemittel (18) ein spezielles hydraulisches Straßenbindemittel ist.

13. Verfahren nach einem der vorhergehenden Ansprüche, **dadurch gekennzeichnet, daß** das hydraulische Bindemittel (18) ein Produkt mit latenter Hydraulik umfaßt.

14. Verfahren nach einem der vorhergehenden Ansprüche, **dadurch gekennzeichnet, daß** wenigstens eines der auf die Granulate aufgetragenen Produkte ein Färbemittel (26) umfaßt.

15. Verfahren nach einem der vorhergehenden Ansprüche, **dadurch gekennzeichnet, daß** wenigstens eines der auf die Granulate aufgetragenen Produkte außerdem ein feuerbeständiges Produkt (18) umfaßt.
